(19) **Europäisches Patentamt**
**European Patent Office**
**Office européen des brevets**

(11) **EP 4 787 459 A1**

(12) **EUROPEAN PATENT APPLICATION**

(43) Date of publication:
05.08.2026 Bulletin 2026/32

(51) International Patent Classification (IPC):
$H01M\ 4/136^{(2010.01)}$ $H01M\ 4/58^{(2010.01)}$
$H01M\ 4/62^{(2006.01)}$ $H01M\ 10/052^{(2010.01)}$
$H01M\ 10/0562^{(2010.01)}$ $H01M\ 10/44^{(2006.01)}$

(21) Application number: 26153560.3

(22) Date of filing: 22.01.2026

(52) Cooperative Patent Classification (CPC):
H01M 10/0562; H01M 4/136; H01M 4/5815;
H01M 4/625; H01M 10/052; H01M 10/44;
H01M 2300/0068

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 31.01.2025 JP 2025015537

(71) Applicant: Toyota Jidosha Kabushiki Kaisha
Toyota-shi, Aichi-ken 471-8571 (JP)

(72) Inventors:
• Asakura, Ryo
471-8571 Toytoa-shi, Aichi-ken, (JP)
• Shiotani, Shinya
471-8571 Toytoa-shi, Aichi-ken, (JP)

(74) Representative: Winter, Brandl - Partnerschaft
mbB
Alois-Steinecker-Straße 22
85354 Freising (DE)

(54) **BATTERY AND BATTERY SYSTEM**

(57) Batteries using a positive electrode mixture comprising a sulfur-based positive electrode active material have room for improvement in terms of capacity and cycle characteristics. The battery of the present disclosure comprises a positive electrode mixture layer, an electrolyte layer, and a negative electrode. The positive electrode mixture layer comprises a sulfur-based active material and a P-containing sulfide. A $^{31}P$ solid-state NMR spectrum of the positive electrode mixture layer satisfies the relationship $I1/I2 \leq 8.5$ ($I1$: integrated intensity of peak originating from $PS_4^{3-}$, $I2$: integrated intensity of peak originating from reduction product).

FIG. 1

100

EP 4 787 459 A1

**Description**

TECHNICAL FIELD

The present application discloses a battery and a battery system.

BACKGROUND ART

PTL 1 discloses a battery using a positive electrode mixture comprising a sulfur-based positive electrode active material.

CITATION LIST

PATENT LITERATURE

PTL 1 Japanese Unexamined Patent Publication (Kokai) No. 2019-212615

SUMMARY

TECHNICAL PROBLEM

Batteries using a positive electrode mixture comprising a sulfur-based positive electrode active material have room for improvement in terms of capacity and cycle characteristics.

SOLUTION TO PROBLEM

The present application discloses the following plurality of aspects as means for achieving the above object.

<Aspect 1>

A battery, comprising a positive electrode mixture layer, an electrolyte layer, and a negative electrode, wherein

the positive electrode mixture layer comprises a sulfur-based active material and a P-containing sulfide, and
a $^{31}$P solid-state NMR spectrum of the positive electrode mixture layer satisfies relationship (1) below:

$$I1/I2 \leq 8.5 \ldots (1)$$

I1: integrated intensity of peak originating from $PS_4{}^{3-}$
I2: integrated intensity of peak originating from reduction product.

<Aspect 2>

The battery according to Aspect 1, wherein
the positive electrode mixture layer comprises carbon nanotube.

<Aspect 3>

The battery according to Aspect 1 or 2, wherein
the electrolyte layer comprises a solid electrolyte.

<Aspect 4>

The battery according to any one of Aspects 1 to 3, wherein
the negative electrode involves deposition of metallic lithium during charging, and involves dissolution of metallic lithium during discharging.

<Aspect 5>

A battery system, comprising a battery and a control unit, wherein

the battery comprises a positive electrode mixture layer, an electrolyte layer, and a negative electrode, wherein the positive electrode mixture layer comprises a sulfur-based active material and a P-containing sulfide, and the control unit controls discharging of the battery so that cutoff potential of the positive electrode mixture layer of the battery is any potential between 1.0 V vs. Li$^+$/Li or more and less than 1.5 V vs. Li$^+$/Li.

ADVANTAGEOUS EFFECTS OF INVENTION

According to the technique of the present disclosure, capacity and cycle characteristics of a battery using a sulfur-based positive electrode active material are improved.

BRIEF DESCRIPTION OF DRAWINGS

FIG. 1 schematically shows one example of a configuration of the battery.
FIG. 2 schematically shows one example of a configuration of the battery system.
FIG. 3 schematically shows configurations of the pressed cells of the Comparative Example and Examples.
FIG. 4 shows $^{31}$P solid-state NMR spectra of the positive electrode mixture layers of the Comparative Example and Examples.
FIG. 5 shows cycle characteristics of the pressed cells of the Comparative Example and Examples.
FIG. 6 shows XAFS measurement results at sulfur K-edge (S K-edge) of the positive electrode mixtures of the Comparative Examples and Examples.
FIG. 7 shows XAFS measurement results at phosphorus K-edge (P K-edge) of the positive electrode mixtures of the Comparative Examples and Examples.

DESCRIPTION OF EMBODIMENTS

Hereinafter, one embodiment of each of the battery and the battery system of the present disclosure will be described. However, the battery and the battery system of the present disclosure are not limited to the embodiments described below.

1. Battery

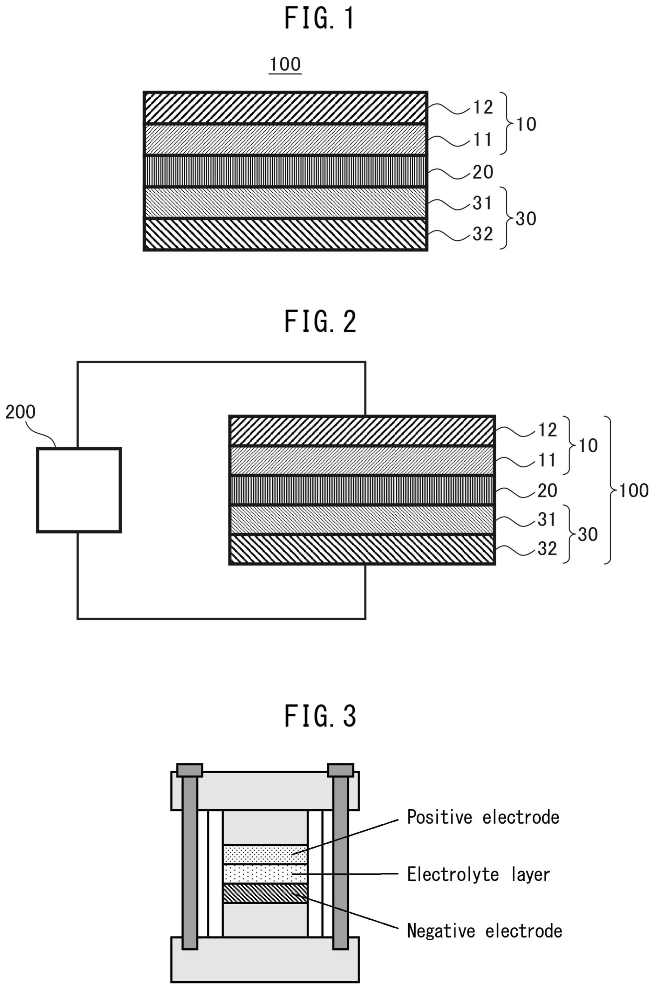

As shown in FIG. 1, the battery 100 according to one embodiment comprises a positive electrode mixture layer 11, an electrolyte layer 20, and a negative electrode 30. The positive electrode mixture layer 11 comprises a sulfur-based active material and a P-containing sulfide. A $^{31}$P solid-state NMR spectrum of the positive electrode mixture layer 11 satisfies relationship (1) below:

$$I1/I2 \leq 8.5 \ldots (1)$$

I1: integrated intensity of peak originating from PS$_4$$^{3-}$
I2: integrated intensity of peak originating from reduction product.

1.1 Positive electrode

As shown in FIG. 1, the positive electrode 10 of the battery 100, for example, may comprise a positive electrode mixture layer 11 and a positive electrode current collector 12 in contact with the positive electrode mixture layer 11. The positive electrode mixture layer 11 may be formed on a surface of the positive electrode current collector 12.

1.1.1 Positive electrode mixture layer

The positive electrode mixture layer 11 comprises a sulfur-based active material and a P-containing sulfide. The positive electrode mixture layer 11 may comprise one or more of an additional active material, an electrolyte, a conductive material, and a binder, in addition to the sulfur-based active material and the P-containing sulfide. When the positive electrode mixture layer 11 comprises a sulfur-based active material and a P-containing sulfide, ion conductivity in the positive electrode mixture layer 11 is likely to increase.

The sulfur-based active material contained in the positive electrode mixture layer 11 needs only to be a material capable of reacting with Li ions, which are charge-compensating ions during discharging, to generate a compound comprising sulfur and lithium (for example, a sulfide such as $Li_2S$) as a discharge product and releasing Li ions during charging. The sulfur-based active material may comprise elemental sulfur, or may consist of elemental sulfur. Elemental sulfur may or may not be octasulfur ($S_8$). The octasulfur ($S_8$) may be $\alpha$-sulfur, may be $\beta$-sulfur, may be $\gamma$-sulfur, or may be a combination thereof. The sulfur-based active material contained in the positive electrode mixture layer 11 may be in solid solution with the P-containing sulfide described below, or may be chemically bonded to the P-containing sulfide. For example, the S in the sulfur-based active material may be chemically bonded with the S in the P-containing sulfide. The shape of the sulfur-based active material contained in the positive electrode mixture layer 11 is not particularly limited, and for example, may be particulate, or may be indeterminate. Whether the positive electrode mixture layer 11 comprises a sulfur-based active material can be determined by carrying out various analyses, such as XAFS, XRD, and NMR, for the positive electrode mixture constituting the positive electrode mixture layer 11. For example, if the positive electrode mixture layer 11 consists of a positive electrode mixture comprising elemental sulfur, when an X-ray diffraction pattern, in which CuK$\alpha$ is used as the radiation source, is acquired for the positive electrode mixture, diffraction peaks originating from elemental sulfur are identified in the X-ray diffraction pattern. The diffraction peaks originating from elemental sulfur typically appear at $2\theta = 23.05°\pm0.50°$, $25.84°\pm0.50°$, and $27.70°\pm0.50°$. The amount of sulfur-based active material contained in the positive electrode mixture layer 11 is not particularly limited, and needs only to be appropriately determined in accordance with target battery performance. In one embodiment, the content of the sulfur-based active material in the positive electrode mixture layer 11 may be 10% by mass or more and less than 100% by mass, 20% by mass or more and 80% by mass or less, or 30% by mass or more and 60% by mass or less.

The P-containing sulfide contained in the positive electrode mixture layer 11 comprises at least P and S as constituent elements, and may further comprise an additional element M. Examples of the additional element M include one or more of Ge, Sn, Si, B, and Al. The P-containing sulfide may or may not comprise Li as a constituent element, in addition to P and S and optionally the element M. The P-containing sulfide may comprise a sulfide as a compound of P and S (for example, $P_2S_5$). The P-containing sulfide may have an orthostructure of P element ($PS_4$ structure). The P-containing compound may bond with the above sulfur-based active material for amorphization, and may be present as $P_2S_6^{4-}$ or $P_2S_7^{4-}$. The shape of the P-containing sulfide contained in the positive electrode mixture layer 11 is not particularly limited, and for example, may be particulate, or may be indeterminate. Whether the positive electrode mixture layer 11 comprises a P-containing sulfide can be determined by carrying out various analyses, such as XAFS, XRD, and NMR, for the positive electrode mixture constituting the positive electrode mixture layer 11. For example, if the positive electrode mixture layer 11 consists of a composite material comprising $P_2S_5$, when an X-ray diffraction pattern, in which CuK$\alpha$ is used as the radiation source, is acquired for the composite material, diffraction peaks originating from $P_2S_5$ are identified in the X-ray diffraction pattern. The diffraction peaks originating from $P_2S_5$ typically appear at $2\theta = 25.84°\pm0.50°$, $30.35°\pm0.50°$, and $31.32°\pm0.50°$. When the positive electrode mixture is measured by XAFS, a peak originating from $P_2S_5$ is identified. When the positive electrode mixture is measured by NMR, a peak originating from $P_2S_5$ is identified. The amount of P-containing sulfide contained in the positive electrode mixture layer 11 is not particularly limited, and needs only to be appropriately determined in accordance with target battery performance. In one embodiment, the content of the P-containing sulfide in the positive electrode mixture layer 11 may be more than 0% by mass and 90% by mass or less, 20% by mass or more and 80% by mass or less, or 30% by mass or more and 60% by mass or less. The molar ratio (P/S) between P element and S element contained in the positive electrode mixture layer 11 is not particularly limited, and for example, may be 0.03 or greater and 0.50 or less. The denominator of the molar ratio (P/S) refers to the total amount of S element contained in the positive electrode mixture layer 11. In the case in which the positive electrode mixture layer 11 comprises a sulfur-based active material, a P-containing sulfide, and the additional sulfide described below, since these materials all contain S element, the amounts of S element are summed to be used as the denominator of the molar ratio (P/S).

The positive electrode mixture layer 11 may comprise a conductive material. The conductive material needs only to be a material that improves the conductive properties of the positive electrode mixture layer 11, and for example, may be one or more of carbon and metal materials. Particularly, when the positive electrode mixture layer 11 comprises carbon as a conductive material, high performance as a battery is easily ensured. In one embodiment, the positive electrode mixture layer 11 may not necessarily comprise a conductive material other than carbon. Carbon, for example, is elemental carbon. Carbon may be one or more of carbon nanotube, vapor-grown carbon fiber (VGCF), acetylene black, furnace black, Ketjenblack, activated carbon, and graphite. Particularly, when the positive electrode mixture layer 11 comprises carbon nanotube, high performance as a battery is easily ensured. The amount of conductive material contained in the positive electrode mixture layer 11 is not particularly limited, and needs only to be appropriately determined in accordance with target battery performance. In one embodiment, the content of conductive material in the positive electrode mixture layer 11 may be 0% by mass or more and 50% by mass or less, 5% by mass or more and 40% by mass or less, or 10% by mass or more and 30% by mass or less.

The positive electrode mixture layer 11 may comprise an additional component such as an additional active material, an additional sulfide, an additional conductive material, or a binder. The content of the additional component in the positive electrode mixture layer 11 is not particularly limited. The additional active material, for example, may include various lithium-containing compounds. The lithium-containing compound may include various lithium-containing oxides such as lithium cobaltate, lithium nickelate, $Li_{1\pm\alpha}Ni_{1/3}Co_{1/3}Mn_{1/3}O_{2\pm\delta}$, lithium manganate, spinel-based lithium compounds (heteroelement-substituted Li-Mn spinels having a composition represented by $Li_{1+x}Mn_{2-x-y}M_yO_4$ (M is one or more selected from Al, Mg, Co, Fe, Ni, and Zn)), lithium titanate, and lithium metal phosphate (such as $LiMPO_4$; M is one or more selected from Fe, Mn, Co, and Ni). The higher the proportion of sulfur-based active material in the entire positive electrode active material, the more likely the expansion and contraction of the positive electrode mixture layer 11 during charging and discharging increase, and the more likely cycle characteristics degrade. According to the present embodiment, as described below, when the $^{31}P$ solid-state NMR spectrum of the positive electrode mixture layer 11 satisfies the predetermined relationship (1), cycle characteristics of the battery are likely to improve. The additional sulfide, for example, may comprise at least an element M (M, for example, is one or more of Ge, Sn, Si, B, and Al) and S as constituent elements. The additional sulfide may contain an orthostructure of the element M. Examples of orthostructures of the element M include one or more of $GeS_4$-type structure, $SnS_4$-type structure, $SiS_4$-type structure, $BS_3$-type structure, and $AlS_3$-type structure. The additional sulfide may include sulfides ($M_xS_y$) as compounds of the elements M and S. The x and y are integers that impart electrical neutrality with S depending on M. Examples of $M_xS_y$ include one or more of $GeS_2$, $SnS_2$, $SiS_2$, $B_2S_3$, and $Al_2S_3$. The binder, for example, may be one or more selected from butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders, and polyimide (PI)-based binders.

The $^{31}P$ solid-state NMR spectrum of the positive electrode mixture layer 11 satisfies the relationship (1) above. Specifically, in the $^{31}P$ solid-state NMR spectrum of the positive electrode mixture layer 11, the integrated intensity of the peak originating from $PS_4^{3-}$ is at or below a certain value relative to the integrated intensity of the peak originating from a reduction product. As described below, for a battery comprising a positive electrode mixture layer comprising a sulfur-based active material and a P-containing sulfide, by controlling the cutoff potential during discharging, an ion-conducting phase, which is the reduction product, self-forms in the positive electrode mixture layer 11, and ion conductivity in the positive electrode mixture layer 11 is improved. As a result, utilization rate of the sulfur-based active material increases, and capacity and cycle characteristics of the battery are improved. In other words, it can be said that the $^{31}P$ solid-state NMR spectrum of the positive electrode mixture layer 11 satisfying the relationship (1) above indicates a state in which an ion-conducting phase, which is the reduction product, has self-formed in the positive electrode mixture layer 11, i.e., a state in which the ion conductivity in the positive electrode mixture layer 11 has been improved. Thus, utilization rate of the sulfur-based compound increases, and excellent capacity and cycle characteristics are easily ensured. The "reduction product" is considered to be a substance generated by the reduction of $PS_4^{3-}$ (e.g., $Li_3PS_4$).

In the relationship (1) above, the lower limit of I1/I2 is not particularly limited. I1/I2 may be 0 or greater, 0.5 or greater, 1.0 or greater, 1.5 or greater, 2.0 or greater, 2.5 or greater, 3.0 or greater, 3.5 or greater, or 4.0 or greater. A $^{31}P$ solid-state NMR spectrum of the positive electrode mixture layer 11 may satisfy any of the relationships (1-1) to (1-22) below:

$$0.5 \leq I1/I2 \leq 8.0 \ldots (1\text{-}1)$$

$$0.5 \leq I1/I2 \leq 7.5 \ldots (1\text{-}2)$$

$$0.5 \leq I1/I2 \leq 7.0 \ldots (1\text{-}3)$$

$$0.5 \leq I1/I2 \leq 6.5 \ldots (1\text{-}4)$$

$$0.5 \leq I1/I2 \leq 6.0 \ldots (1\text{-}5)$$

$$0.5 \leq I1/I2 \leq 5.5 \ldots (1\text{-}6)$$

$$0.5 \leq I1/I2 \leq 5.0 \ldots (1\text{-}7)$$

$$0.5 \leq I1/I2 \leq 4.5 \ldots (1\text{-}8)$$

$$1.0 \leq I1/I2 \leq 8.0 \ldots (1\text{-}9)$$

$$1.5 \leq I1/I2 \leq 8.0 \ldots (1\text{-}10)$$

$$2.0 \leq I1/I2 \leq 8.0 \ldots (1\text{-}11)$$

$$2.5 \leq I1/I2 \leq 8.0 \ldots (1\text{-}12)$$

$$3.0 \leq I1/I2 \leq 8.0 \ldots (1\text{-}13)$$

$$3.5 \leq I1/I2 \leq 8.0 \ldots (1\text{-}14)$$

$$4.0 \leq I1/I2 \leq 8.0 \ldots (1\text{-}15)$$

$$1.0 \leq I1/I2 \leq 7.5 \ldots (1\text{-}16)$$

$$1.5 \leq I1/I2 \leq 7.0 \ldots (1\text{-}17)$$

$$2.0 \leq I1/I2 \leq 6.5 \ldots (1\text{-}18)$$

$$2.5 \leq I1/I2 \leq 6.0 \ldots (1\text{-}19)$$

$$3.0 \leq I1/I2 \leq 5.5 \ldots (1\text{-}20)$$

$$3.5 \leq I1/I2 \leq 5.0 \ldots (1\text{-}21)$$

$$4.0 \leq I1/I2 \leq 4.5 \ldots (1\text{-}22).$$

In this case, superior capacity and cycle characteristics are easily ensured.

The acquisition conditions for the $^{31}$P solid-state NMR spectrum of the positive electrode mixture layer 11 are as follows.

(I) A powder of the positive electrode mixture is obtained from the positive electrode mixture layer 11.
(II) Approximately 25 $\mu$L of the powder is placed in a 3.2-mm solid-state NMR sample tube in an Ar atmosphere.
(III) Using ECA-500 FT-NMR manufactured by JEOL Ltd., $^{31}$P solid-state NMR measurement is carried out in room temperature under the following conditions.

Probe: 3.2-mm CPMAS probe
Magnetic field intensity: 11.747 T (202.4 MHz for 31P nucleus)
Observation frequency range: -450 ppm to 550 ppm
Number of data points: 2048 points
Measurement mode: single pulse
Repetition time: 300 sec

Number of integrations: 64 times (5.5-h measurement)
Reference substance: ammonium dihydrogen phosphate (external reference: 1.33 ppm) MAS rotational speed: 18 kHz

(IV) After a spectrum is acquired by carrying out the $^{31}P$ solid-state NMR measurement and then applying baseline correction, waveform separation by Gaussian function and calculation of integrated intensity of each peak are carried out to determine I1 and I2.

In the $^{31}P$ solid-state NMR spectrum acquired under the above conditions, the peak originating from $PS_4^{3-}$ appears at 80 to 84 ppm and the peak originating from the reduction product appears at 70 to 78 ppm. Specifically, the peak originating from the reduction product is located at a chemical shift slightly lower than that of the peak originating from $PS_4^{3-}$. In the $^{31}P$ solid-state NMR spectrum acquired under the above conditions, the peak originating from $PS_4^{3-}$ and the peak originating from the reduction product may overlap. In this case, as the peak originating from the reduction product increases, the proportion of the shoulder on the lower chemical shift side of the peak originating from $PS_4^{3-}$ increases.

The positive electrode mixture constituting the positive electrode mixture layer 11 according to one embodiment may be one in which, in the XAFS measurement results at phosphorus K-edge (P K-edge), a peak having a peak top within the range of 2144 eV or more and 2147 eV or less is confirmed.

The shape and thickness of the positive electrode mixture layer 11 are not particularly limited and need only to be appropriately determined in consideration of target battery performance. The positive electrode mixture layer 11 may be a sheet having a substantially flat surface. The thickness of the positive electrode mixture layer 11, for example, may be 0.1 $\mu$m or more, 1 $\mu$m or more, 10 $\mu$m or more, or 30 $\mu$m or more, and may be 2 mm or less, 1 mm or less, 500 $\mu$m or less, or 100 $\mu$m or less.

1.1.2 Positive electrode current collector

As shown in FIG. 1, the positive electrode 10 of the battery 100 may comprise a positive electrode current collector 12 in contact with the positive electrode mixture layer 11. The constituent material, shape, and size of the positive electrode current collector 12 are not particularly limited. The positive electrode current collector 12, for example, may be foil-like or plate-like. The positive electrode current collector 12 may be a metal foil. Alternatively, the positive electrode current collector 12 may have a layer consisting of a resin composition comprising a resin and a conductive material. Alternatively, the positive electrode current collector 12 may comprise a combination of a metal foil and a layer consisting of a resin composition. The positive electrode current collector 12 may consist of a plurality of foils or sheets. Examples of metals constituting the foil for the positive electrode current collector 12 include at least one selected from Cu, Ni, Cr, Au, Pt, Ag, Al, Fe, Ti, Zn, Co, V, Mg, Pb, Ge, In, Sn, Zr, and stainless steel. Particularly, from the viewpoint of ensuring oxidation resistance, the positive electrode current collector 12 may comprise Al. The positive electrode current collector 12 may be a metal foil or a substrate plated or vapor-deposited with a metal described above. When the positive electrode current collector 12 consists of a plurality of metal foils, there may be some layer between the plurality of metal foils. The thickness of the positive electrode current collector 12 is not particularly limited. The thickness of the positive electrode current collector 12, for example, may be 1 $\mu$m or more or 1 mm or less.

1.2 Electrolyte layer

As shown in FIG. 1, the electrolyte layer 20 is arranged between the positive electrode mixture layer 11 and the negative electrode 30. The electrolyte layer 20 comprises at least an electrolyte. The electrolyte layer 20 may be at least one of a solid electrolyte and a liquid electrolyte (electrolytic solution), and may further optionally comprise a binder. Particularly, when the electrolyte layer 20 comprises a solid electrolyte, higher performance is easily ensured. The electrolyte layer 20 may be a solid electrolyte layer free of a liquid electrolyte. According to the present technique, cracking of the solid electrolyte layer during charging and discharging of the battery is less likely to occur. Alternatively, the electrolyte layer 20 may have a separator for retaining a liquid electrolyte and preventing contact between the positive electrode mixture layer 11 and the negative electrode 30. The thickness of the electrolyte layer 20 is not particularly limited, and for example, may be 0.1 $\mu$m or more or 1 $\mu$m or more, and may be 2 mm or less or 1 mm or less. The electrolyte layer 20 may consist of one layer, or may consist of a plurality of layers. For example, the electrolyte layer 20 may comprise a first layer arranged on the positive electrode mixture layer 11 side and a second layer arranged on the negative electrode 30 side, and may be an electrolyte layer in which the first layer comprises a first electrolyte, and the second layer comprises a second electrolyte. The first electrolyte and the second electrolyte may be of different types from one another. The first electrolyte and the second electrolyte may each be at least one selected from oxide solid electrolytes, sulfide solid electrolytes, and solid electrolytes having ion-binding properties described below. For example, the first layer may comprise a solid electrolyte having ion-binding properties, and the second layer may comprise at least one of a solid electrolyte having ion-binding properties and a sulfide solid electrolyte.

### 1.2.1 Solid electrolyte

The solid electrolyte may be an inorganic solid electrolyte or an organic polymer electrolyte. Particularly, an inorganic solid electrolyte exhibits excellent ion conductivity and heat resistance. Examples of the inorganic solid electrolyte include oxide solid electrolytes, sulfide solid electrolytes, and inorganic solid electrolytes having ion-binding properties. Among inorganic solid electrolytes, sulfide solid electrolytes, especially sulfide solid electrolytes comprising at least Li, S, and P as constituent elements, have high performance. Alternatively, among inorganic solid electrolytes, solid electrolytes having ion-binding properties, especially solid electrolytes comprising at least Li, Y, and a halogen (at least one of Cl, Br, I, and F) as constituent elements, have high performance. The solid electrolyte may be amorphous, or may be crystalline. The solid electrolyte may be particulate. The average particle size (D50) of the solid electrolyte, for example, may be 10 nm or more and 10 $\mu$m or less.

The oxide solid electrolyte may be one or more selected from lithium lanthanum zirconate, LiPON, $Li_{1+x}Al_xGe_{2-x}$ $(PO_4)_3$, Li-SiO-based glass, and Li-Al-S-O-based glass. When an oxide solid electrolyte and a liquid electrolyte are combined, ion conductivity can be improved.

The sulfide solid electrolyte may be a glass-based sulfide solid electrolyte (sulfide glass), may be a glass-ceramic-based sulfide solid electrolyte, or may be a crystal-based sulfide solid electrolyte. The sulfide glass is amorphous. The sulfide glass may have a glass transition temperature (Tg). When the sulfide solid electrolyte has a crystal phase, examples of the crystal phase include Thio-LISICON-type crystal phase, LGPS-type crystal phase, and argyrodite-type crystal phase. The sulfide solid electrolyte may be particulate. The average particle size (D50) of the sulfide solid electrolyte, for example, may be 10 nm or more and 100 $\mu$m or less.

The sulfide solid electrolyte, for example, may contain Li element, an X element (X is at least one of P, As, Sb, Si, Ge, Sn, B, Al, Ga, and In), and S element. The sulfide solid electrolyte may further contain at least one of O element and a halogen element. The sulfide solid electrolyte may contain S element as an anionic element main component.

The sulfide solid electrolyte, for example, may be at least one selected from $Li_2S\text{-}P_2S_5$, $Li_2S\text{-}P_2S_5\text{-}LiI$, $Li_2S\text{-}P_2S_5\text{-}GeS_2$, $Li_2S\text{-}P_2S_5\text{-}Li_2O$, $Li_2S\text{-}P_2S_5\text{-}Li_2O\text{-}LiI$, $Li_2S\text{-}P_2S_5\text{-}LiI\text{-}LiBr$, $Li_2S\text{-}SiS_2$, $Li_2S\text{-}SiS_2\text{-}LiI$, $Li_2S\text{-}SiS_2\text{-}LiBr$, $Li_2S\text{-}SiS_2\text{-}LiCl$, $Li_2S\text{-}SiS_2\text{-}B_2S_3\text{-}LiI$, $Li_2S\text{-}SiS_2\text{-}P_2S_5\text{-}LiI$, $Li_2S\text{-}B_2S_3$, $Li_2S\text{-}P_2S_5\text{-}Z_mS_n$ (where m and n are positive numbers, and Z is any of Ge, Zn, and Ga), $Li_2S\text{-}GeS_2$, $Li_2S\text{-}SiS_2\text{-}Li_3PO_4$, and $Li_2S\text{-}SiS_2\text{-}Li_xMO_y$ (where x and y are positive numbers, and M is any of P, Si, Ge, B, Al, Ga, and In).

The composition of the sulfide solid electrolyte is not particularly limited. Examples thereof include $xLi_2S\cdot(100 - x)$ $P_2S_5$ ($70 \leq x \leq 80$) and $yLiI\cdot zLiBr\cdot(100 - y - z)(xLi_2S\cdot(1 - x)P_2S_5)$ ($0.7 \leq x \leq 0.8$, $0 \leq y \leq 30$, and $0 \leq z \leq 30$). Alternatively, the sulfide solid electrolyte may have a composition represented by general formula: $Li_{4-x}Ge_{1-x}P_xS_4$ ($0 < x < 1$). In the above general formula, at least a portion of Ge may be substituted with at least one of Sb, Si, Sn, B, Al, Ga, In, Ti, Zr, V, and Nb. In the above general formula, at least a portion of P may be substituted with at least one of Sb, Si, Sn, B, Al, Ga, In, Ti, Zr, V, and Nb. In the above general formula, a portion of Li may be substituted with at least one of Na, K, Mg, Ca, and Zn. In the above general formula, a portion of S may be substituted with a halogen (at least one of F, Cl, Br, and I). Alternatively, the sulfide solid electrolyte may have a composition represented by $Li_{7-a}PS_{6-a}X_a$ (X is at least one of Cl, Br, and I, and a is a number of 0 or greater and 2 or less). a may be 0, or may be greater than 0. In the latter case, a may be 0.1 or greater, may be 0.5 or greater, or may be 1 or greater. In addition, a may be 1.8 or less, or may be 1.5 or less.

The solid electrolyte having ion-binding properties, for example, may comprise at least one element selected from the group consisting of Mg, Ca, Sr, Ba, Zn, Sn, Al, Sc, Ga, Bi, Sb, Zr, Hf, Ti, Ta, Nb, W, Y, Gd, Tb, and Sm. These elements can generate cations in water. The ion-binding solid electrolyte material, for example, may comprise at least one halogen element selected from the group consisting of Cl, Br, I, and F. These elements can generate anions in water. The solid electrolyte having ion-binding properties may comprise at least one selected from the group consisting of Gd, Ca, Zr, and Y, at least one selected from the group consisting of Cl, Br, I, and F, and Li. The solid electrolyte having ion-binding properties comprises Li and Y, and may comprise at least one selected from the group consisting of Cl, Br, I, and F. More specifically, the solid electrolyte having ion-binding properties may comprise Li, Y, Cl, and Br, may comprise Li, Ca, Y, Gd, Cl, and Br, or may comprise Li, Zr, Y, and Cl. Even more specifically, the solid electrolyte having ion-binding properties may be at least one of $Li_3YBr_2Cl_4$, $Li_{2.8}Ca_{0.1}Y_{0.5}Gd_{0.5}Br_2Cl_4$, and $Li_{2.5}Y_{0.5}Zr_{0.5}Cl_6$.

The solid electrolyte having ion-binding properties may be a halide solid electrolyte. A halide solid electrolyte exhibits excellent ion conductivity. The halide solid electrolyte may have a composition represented by, for example, formula (A):

$$Li_\alpha M_\beta X_\gamma \ ... \qquad (A)$$

where $\alpha$, $\beta$, and $\gamma$ are each independently a value greater than 0, M is at least one selected from the group consisting of metal elements other than Li and semimetal elements, and X is at least one selected from the group consisting of Cl, Br, and I. Note that a "semimetal element" may be at least one selected from the group consisting of B, Si, Ge, As, Sb, and Te. Further, a "metal element" may include (i) all of the elements contained from Group 1 to Group 12 of the periodic table (excluding hydrogen) and (ii) all of the elements contained from Group 13 to Group 16 of the periodic table (excluding B, Si, Ge, As, Sb, Te, C, N, P, O, S, and Se). A metal element can form an inorganic compound with halide ions and form cations.

In the formula (A), M may comprise Y (i.e., yttrium). A halide solid electrolyte comprising Y may have a composition represented by $Li_aMe_bY_cX_6$ (where $a + mb + 3c = 6$, $c > 0$, Me is at least one selected from the group consisting of metal elements and semimetal elements other than Li and Y, and m is the valence of Me). Me, for example, may be at least one selected from the group consisting of Mg, Ca, Sr, Ba, Zn, Sc, Al, Ga, Bi, Zr, Hf, Ti, Sn, Ta, and Nb.

The halide solid electrolyte may have a composition represented by formula (A1): $Li_{6-3d}Y_dX_6$. In the formula (A1), X is one or more elements selected from the group consisting of Cl, Br, and I. d may satisfy $0 < d < 2$, or may be $d = 1$. The halide solid electrolyte may have a composition represented by formula (A2): $Li_{3.3\delta}Y_{1+\delta}Cl_6$. In the formula (A2), $\delta$ may be $0 < \delta \leq 0.15$. The halide solid electrolyte may have a composition represented by formula (A3): $Li_{3-3\delta}Y_{1+\delta}Br_6$. In the formula (A3), $\delta$ may be $0 < \delta \leq 0.25$. The halide solid electrolyte may have a composition represented by formula (A4): $Li_{3-3\delta+a}Y_{1+\delta-a}Me_aCl_{6-x-y}Br_xI_y$. In the formula (A4), Me may be at least one selected from the group consisting of Mg, Ca, Sr, Ba, and Zn. In the formula (A4), for example, $-1 < \delta < 2$, $0 < a < 3$, $0 < (3 - 3\delta + a)$, $0 < (1 + \delta - a)$, $0 \leq x \leq 6$, $0 \leq y \leq 6$, and $(x + y) \leq 6$ are satisfied. The halide solid electrolyte may have a composition represented by formula (A5): $Li_{3-3\delta}Y_{1+\delta-a}Me_aCl_{6-x-y}Br_xI_y$. In the formula (A5), Me may be at least one selected from the group consisting of Al, Sc, Ga, and Bi. In the formula (A5), the variables may satisfy $-1 < \delta < 1$, $0 < a < 2$, $0 < (1 + \delta - a)$, $0 \leq x \leq 6$, $0 \leq y \leq 6$, and $(x + y) \leq 6$. The halide solid electrolyte may have a composition represented by formula (A6): $Li_{3-3\delta-a}Y_{1+\delta-a}Me_aCl_{6-x-y}Br_xI_y$. In the formula (A6), Me may be at least one selected from the group consisting of Zr, Hf, and Ti. In the formula (A6), the variables may satisfy $-1 < \delta < 1$, $0 < a < 1.5$, $0 < (3 - 3\delta - a)$, $0 < (1 + \delta - a)$, $0 \leq x \leq 6$, $0 \leq y \leq 6$, and $(x + y) \leq 6$. The halide solid electrolyte may have a composition represented by formula (A7): $Li_{3-3\delta-2a}Y_{1+\delta-a}Me_aCl_{6-x-y}Br_xI_y$. In the formula (A7), Me may be at least one selected from the group consisting of Ta and Nb. In the formula (A7), the variables may satisfy $-1 < \delta < 1$, $0 < a < 1.2$, $0 < (3 - 3\delta - 2a)$, $0 < (1 + \delta - a)$, $0 \leq x \leq 6$, $0 \leq y \leq 6$, and $(x + y) \leq 6$.

The solid electrolyte having ion-binding properties may be a complex hydride solid electrolyte. The complex hydride solid electrolyte can be composed of Li ions and complex ions comprising H. The complex ion comprising H, for example, may comprise an element M comprising at least one of nonmetal elements, semimetal elements, and metal elements and H bonded to the element M. In the complex ion comprising H, an element M as a central element and H surrounding the element M may be bonded to each other via a covalent bond. The complex ion comprising H may be represented by $(M_mH_n)^{\alpha-}$. In this case, m can be any positive number, and n and $\alpha$ can take on any positive number depending on m and the valence of the element M. The element M needs only to be any nonmetal element or metal element that can form a complex ion. For example, the element M may comprise at least one of B, C, and N as a nonmetal element, or may comprise B. Further, for example, the element M may comprise at least one of Al, Ni, and Fe as a metal element. Particularly, when the complex ion comprises B or comprises C and B, higher ion conductivity is easily ensured. Specific examples of the complex ion comprising H include $(CB_9H_{10})^-$, $(CB_{11}H_{12})^-$, $(B_{10}H_{10})^{2-}$, $(B_{12}H_{12})^{2-}$, $(BH_4)^-$, $(NH_2)^-$, $(AlH_4)^-$, and combinations thereof. Particularly, when $(CB_9H_{10})^-$, $(CB_{11}H_{12})^-$, or a combination thereof is used, higher ion conductivity is easily ensured. Specifically, the complex hydride solid electrolyte may comprise Li, C, B, and H.

1.2.2 Liquid electrolyte

The liquid electrolyte (electrolytic solution) is a liquid comprising lithium ions as carrier ions. The electrolytic solution may be a water-based electrolytic solution or a non-water-based electrolytic solution. The composition of the electrolytic solution needs only to be the same as any known electrolytic solution for lithium-ion batteries. The electrolytic solution may be water or a non-water-based solvent in which a lithium salt is dissolved. Examples of the non-water-based solvent include various carbonate-based solvents. Examples of the lithium salt include lithium amide salts and $LiPF_6$. The separator for retaining a liquid electrolyte needs only to be a commonly used separator in batteries, and examples include those made of resins such as polyethylene (PE), polypropylene (PP), polyester, and polyamide. The separator may have a single-layer structure, or may have a multilayer structure. Examples of separators having a multilayer structure can include separators having a PE/PP two-layer structure and separators having a PP/PE/PP or PE/PP/PE three-layer structure. The separator may consist of a nonwoven fabric such as cellulose nonwoven fabric, resin nonwoven fabric, or glass-fiber nonwoven fabric.

1.2.3 Additional components

The binder that can be contained in the electrolyte layer 20 needs only to be appropriately selected from among ones exemplified as a binder that can be contained in the positive electrode mixture layer 11 described above. The binder may be of one type used alone, or may be of two or more types used in combination. The electrolyte layer 20 may comprise various additives.

1.3 Negative electrode

As shown in FIG. 1, the negative electrode 30 of the battery 100, for example, may comprise a negative electrode active material layer 31 and a negative electrode current collector 32 in contact with the negative electrode active material layer 31. In one embodiment, the negative electrode 30 may involve deposition of metallic lithium during charging, and may involve dissolution of metallic lithium during discharging. In this case, metallic lithium is regarded as constituting the negative electrode active material layer 31. In this case, for the purpose of uniformizing the deposition and dissolution of metallic lithium, an intermediate layer may be present between the electrolyte layer 20 and the negative electrode 30. The type of intermediate layer is not particularly limited, and may be a layer comprising an element capable of alloying with metallic lithium.

1.3.1 Negative electrode active material layer

The negative electrode active material layer 31 involves deposition and dissolution of metallic lithium, as described above. Specifically, the battery 100 may be configured so that metallic lithium undergoes deposition between the electrolyte layer 20 and the negative electrode current collector 32 during charging, and the metallic lithium between the electrolyte layer 20 and the negative electrode current collector 32 undergoes dissolution (ionization) during discharging so as to return to the positive electrode. "Metallic lithium" in this case is a concept that includes elemental lithium and lithium alloys. Specifically, in the battery 100, metallic lithium may be deposited as elemental lithium, or may be deposited as an alloy with another metal. Examples of lithium alloys include Li-Mg, Li-Sn, Li-Al, Li-B, Li-C, Li-Si, Li-Ca, Li-Ga, Li-Ge, Li-As, Li-Se, Li-Ru, Li-Rh, Li-Pd, Li-Ag, Li-Au, Li-Cd, Li-In, Li-Sb, Li-Ir, Li-Pt, Li-Hg, Li-Pb, Li-Bi, Li-Zn, Li-Tl, Li-Te, and Li-At. The lithium alloy may be of one type, or may be of two or more types. The deposition amount of metallic lithium between the electrolyte layer 20 and the negative electrode current collector 32 is not particularly limited, and needs only to be appropriately adjusted in accordance with target battery performance. However, if the amount of metallic lithium deposited is excessively large, there are concerns such as concentration of pressure. In this regard, the deposition amount of metallic lithium, as a guideline, may be an amount so that the charge capacity of the battery 100, for example, is 1 $mAh/cm^2$ or more and 5 $mAh/cm^2$ or less.

The negative electrode active material layer 31 comprises a negative electrode active material, and may optionally comprise an electrolyte, a conductive aid, a binder, and various additives. The content of each component in the negative electrode active material layer 31 needs only to be appropriately determined in accordance with target battery performance. For example, when the entire solid content contained in the negative electrode active material layer 31 is 100% by mass, the content of the negative electrode active material may be 40% by mass or more, 50% by mass or more, 60% by mass or more, or 70% by mass or more, and may be 100% by mass or less, less than 100% by mass, 95% by mass or less, or 90% by mass or less. In this case, the shape of the negative electrode active material layer 31 is not particularly limited, and for example, may be a sheet having a substantially flat surface. The thickness of the negative electrode active material layer 31 in this case is not particularly limited, and for example, may be 0.1 $\mu$m or more, 1 $\mu$m or more, 10 $\mu$m or more, or 30 $\mu$m or more, and may be 2 mm or less, 1 mm or less, 500 $\mu$m or less, or 100 $\mu$m or less. For the negative electrode active material, any material known as a negative electrode active material for batteries can be adopted. For example, silicon-based active materials such as Si, Si alloys, and silicon oxides; carbon-based active materials such as graphite and hard carbon; various oxide-based active materials such as lithium titanate; and metallic lithium and lithium alloys described above can be adopted. The negative electrode active material may be of one type used alone, or may be of two or more types used in combination. The shape of the negative electrode active material needs only to be any general shapes of negative electrode active materials of batteries. For example, the negative electrode active material may be particulate. The negative electrode active material particles may be primary particles, or may be secondary particles of a plurality of agglomerated primary particles. The average particle diameter (D50) of the negative electrode active material particles, for example, may be 1 nm or more, 5 nm or more, or 10 nm or more, and may be 500 $\mu$m or less, 100 $\mu$m or less, 50 $\mu$m or less, or 30 $\mu$m or less. Alternatively, the negative electrode active material may be a foil-like or membranous metallic lithium, as described above. Specifically, the negative electrode active material layer 31 may consist of a sheet of negative electrode active material. The electrolyte that can be contained in the negative electrode active material layer 31, for example, includes the solid electrolytes and electrolytic solutions described above, and combinations thereof. The conductive material that can be contained in the negative electrode active material layer 31, for example, needs only to be appropriately selected from among carbon and metal materials other than carbon exemplified as a conductive material that can be contained in the positive electrode mixture layer 11 described above. The binder that can be contained in the negative electrode active material layer 31, for example, needs only to be appropriately selected from among one exemplified as a binder that can be contained in the positive electrode mixture layer 11 described above. The electrolyte, the conductive aid, and the binder may each be of one type used alone, or may be of two or more types used in combination.

1.3.2 Negative electrode current collector

For the negative electrode current collector 32, any material that can function as a negative electrode current collector for batteries can be adopted. The negative electrode current collector 32 may be a metal foil or a metal mesh, and alternatively, may be a carbon sheet. Particularly, a metal foil has excellent handleability. The negative electrode current collector 32 may consist of a plurality of foils or sheets. Metals constituting the metal foil as the negative electrode current collector 32 include at least one selected from Cu, Ni, Cr, Au, Pt, Ag, Al, Fe, Ti, Zn, Co, and stainless steel. Particularly, from the viewpoint of ensuring reduction resistance and the viewpoint of being less susceptible to alloying with lithium, the negative electrode current collector 32 may comprise at least one metal selected from Cu, Ni, and stainless steel, and preferably comprises at least one of Ni and stainless steel. The negative electrode current collector 32 may have on the surface thereof some coating layer. For example, the negative electrode current collector 32 may have on the surface thereof some protective layer. In one embodiment, the negative electrode current collector 32 may comprise a conductive material selected from the above metal foil, metal mesh, and carbon sheet, and a protective layer formed on the surface of the conductive material. The protective layer, for example, may comprise Mg. It is considered that due to the negative electrode current collector 32 having a protective layer comprising Mg, diffusion of Li on the surface of the negative electrode current collector 32 is promoted, affinity of metallic lithium for the negative electrode current collector 32 is increased, gaps between negative electrode current collector 32 and metallic lithium are suppressed, and metallic lithium is more uniformly deposited on the surface of the negative electrode current collector 32. When the negative electrode current collector 32 consists of a plurality of metal foils, there may be some layer between the plurality of metal foils. The thickness of the negative electrode current collector 32 is not particularly limited, and for example, may be 0.1 $\mu$m or more or 1 $\mu$m or more, and may be 1 mm or less or 100 $\mu$m or less.

1.4 Additional configurations

The battery 100 may be provided with any general configuration as a battery, for example, tabs or terminals, in addition to the above configurations. The above configurations of the battery 100 may each be housed inside an outer packaging. Any known outer packaging can be adopted as an outer packaging of the battery. In addition, a plurality of batteries 100 may be optionally connected electrically and optionally stacked to form a battery pack. In this case, the battery pack may be housed inside a known battery case. Examples of shapes of the battery 100 can include coin type, laminate type, cylindrical type, and square type. The battery 100 may comprise a constraining member for constraining each of the above configurations in the thickness direction. The constraining pressure applied by the constraining member is likely to lower internal resistance of the battery. The constraining pressure by the constraining member is not particularly limited. The constraining pressure by the constraining member may be 5 MPa or less, 3 MPa or less, or 1 MPa or less. The battery 100 may be a secondary battery. The battery 100 may be a lithium-sulfur battery (LiS battery). The battery 100 may be an all-solid battery substantially free of a liquid electrolyte. The battery 100 may be an all-solid lithium-sulfur battery.

2. Method for manufacturing battery

The battery 100, except that the above positive electrode mixture layer is provided, can be manufactured by applying any known method. In one embodiment, the battery 100, for example, can be manufactured as follows. However, the method for manufacturing a battery 100 is not limited to the following method, and each layer may be formed by, for example, dry molding.

(1) A sulfur-based active material constituting a positive electrode mixture layer is dispersed in a solvent to obtain a positive electrode layer slurry. The solvent used in this case is not particularly limited, and various organic solvents can be used. The roughened surface (contact surface) of the positive electrode current collector is coated with the positive electrode layer slurry using a doctor blade, followed by drying, whereby a positive electrode mixture layer is formed on the roughened surface (contact surface) of the positive electrode current collector to obtain a positive electrode.

(2) A metallic lithium foil as a negative electrode active material is prepared and combined with a negative electrode current collector to obtain a negative electrode. Alternatively, a negative electrode active material constituting a negative electrode active material layer is dispersed in a solvent to obtain a negative electrode layer slurry. The solvent used in this case is not particularly limited, and water and various organic solvents can be used. The surface of the negative electrode current collector is coated with the negative electrode layer slurry using a doctor blade, followed by drying, whereby a negative electrode active material layer is formed on the surface of the negative electrode current collector to obtain a negative electrode.

(3) Layers are laminated so that an electrolyte layer (solid electrolyte layer or separator) is interposed between the negative electrode and the positive electrode to obtain a laminated body comprising, in the order of, a negative electrode current collector, a negative electrode active material layer, an electrolyte layer, a positive electrode mixture layer, and a positive electrode current collector. Additional members such as terminals are attached to the laminated body, as necessary.

(4) The laminated body is housed in a battery case. In the case of an electrolytic solution battery, the battery case is filled with an electrolytic solution. The laminated body is immersed in the electrolytic solution, and the laminated body is sealed in the battery case.

(5) After sealing, discharging is carried out while controlling cutoff potential of the positive electrode mixture layer, whereby an ion-conducting phase, which is the reduction product, self-forms in the positive electrode mixture layer, ion conductivity of the positive electrode mixture layer is improved, and a battery having excellent capacity and cycle characteristics is obtained. The discharge conditions are as described below.

3. Battery system

The technique of the present disclosure includes aspects as a battery system, in addition to the aspects as a battery described above. As shown in FIG. 2, the battery system according to one embodiment comprises a battery 100 and a control unit 200. The battery 100 comprises a positive electrode mixture layer 11, an electrolyte layer 20, and a negative electrode 30. The positive electrode mixture layer 11 comprises a sulfur-based active material and a P-containing sulfide. The control unit 200 controls discharging of the battery 100 so that the cutoff potential of the positive electrode mixture layer 11 of the battery 100 is any potential between 1.0 V vs. Li$^+$/Li or more and less than 1.5 V vs. Li$^+$/Li.

The control unit 200 needs only to be capable of controlling at least the discharging of the battery 100. The control unit 200, for example, may comprise an ECU (electronic control unit) and a PCU (power control unit). For example, during discharging of the battery 100, the control unit 200 may successively measure the potential of the positive electrode 10 of the battery 100, continue discharging if the measured potential of the positive electrode 10 exceeds a threshold value, and stop discharging when the measured potential of the positive electrode 10 reaches the threshold value. The control unit 200 may control charging of the battery 100 in addition to discharging. When charging of the battery 100 is controlled by the control unit 200, the cutoff potential for charging is not particularly limited, and a suitable cutoff potential is adopted while taking into consideration the deterioration and decomposition of the battery materials.

When the cutoff potential for discharging of the battery 100 is controlled by the control unit 200 as described above, an ion-conducting phase, which is the reduction product, self-forms in the positive electrode mixture layer 11, and ion conductivity in the positive electrode mixture layer 11 is improved. As a result, utilization rate of the sulfur-based active material increases, and a battery 100 having excellent capacity and cycle characteristics is obtained. If the cutoff potential is less than 1.5 V vs. Li$^+$/Li, a significant increase in discharge capacity, including the reduction reaction of the electrochemically formed ion-conducting phase, is likely to occur. If the cutoff potential 1.0 V vs. Li$^+$/Li or more, self-decomposition of the electrochemically formed ion-conducting phase can be suppressed, and high discharge capacity and excellent cycle characteristics are both likely to be achieved. In other words, when discharging of the battery 100 is controlled so that the cutoff potential is any potential between 1.0 V vs. Li$^+$/Li or more and less than 1.5 V vs. Li$^+$/Li, the ion-conducting phase, which is the reduction product, is present in an appropriate state in the positive electrode mixture layer 11 of the battery 100, and the $^{31}$P solid-state NMR spectrum of the positive electrode mixture layer 11 satisfies the relationship (1) above. In one embodiment, the control unit 200 may control discharging of the battery 100 so that the cutoff potential of the positive electrode mixture layer 11 of the battery 100 is any potential between more than 1.0 V vs. Li$^+$/Li and 1.4 V vs. Li$^+$/Li or less, any potential between 1.1 V vs. Li$^+$/Li or more and 1.3 V vs. Li$^+$/Li or less, or 1.2 V vs. Li$^+$/Li.

4. Vehicle

As described above, the battery of the present disclosure has excellent cycle characteristics. Such a battery, for example, can be suitably used in at least one type of vehicle selected from hybrid vehicle (HEV), plug-in hybrid vehicle (PHEV), and electric vehicle (BEV). Specifically, the technique of the present disclosure relates to a vehicle comprising a battery, wherein the battery comprises a positive electrode mixture layer, an electrolyte layer, and a negative electrode; the positive electrode mixture layer comprises a sulfur-based active material and a P-containing sulfide; and the $^{31}$P solid-state NMR spectrum of the positive electrode mixture layer satisfies the relationship (1) above. Each configuration of the battery is as described above. In addition, the technique of the present disclosure relates to a vehicle comprising a battery system, wherein the battery system comprises a battery and a control unit, wherein the battery comprises a positive electrode mixture layer, an electrolyte layer, and a negative electrode; the positive electrode mixture layer comprises a sulfur-based active material and a P-containing sulfide, and the control unit controls discharging of the battery so that the cutoff potential of the positive electrode mixture layer of the battery is any potential between 1.0 V vs. Li$^+$/Li or more and less than 1.5 V vs. Li$^+$/Li. Each configuration of the battery system is as described above.

EXAMPLES

From the foregoing, one embodiment of each of the battery and the battery system has been described. However, the technique of the present disclosure can be modified in various ways other than the above embodiment in ranges that do not depart from the spirit of the invention. Hereinafter, the technique of the present disclosure will be further described with reference to the Examples. However, the technique of the present disclosure is not limited to the following Examples.

1. Production of positive electrode mixture

Elemental sulfur (80°C vacuum-dried product) as a sulfur-based active material, $P_2S_5$ as a P-containing sulfide, and single-walled carbon nanotube (120°C vacuum-dried product) as a conductive material were weighed so as to obtain a mass ratio of elemental sulfur : $P_2S_5$ : single-walled carbon nanotube = 42:35:23, and mixed in a mortar to obtain a mixture. 1.7 g of the mixture and 80 g of φ4-mm zirconia balls were added per ball mill pot, and mixed by a planetary ball mill at 400 rpm for 36 h. After mixing by planetary ball mill, the mixture was dry-classified using a 38-μm sieve to obtain a positive electrode mixture.

2. Production of pressed cell A

Using the positive electrode mixture produced as described above, a φ11.28-mm pressed cell A was produced by the following procedure. The configuration of the produced pressed cell A is as shown in FIG. 3.

(1) 100 mg of a sulfide solid electrolyte was placed into a cell and pressed at 1 ton.
(2) 7.6 mg of the positive electrode mixture was placed on the upper side of the sulfide solid electrolyte layer within the cell and pressed at 1 ton.
(3) An Al foil punched to φ11.28 mm was placed on the upper side of the positive electrode mixture layer within the cell and pressed at 6 tons.
(4) A Li-10 wt% Mg alloy foil (thickness of 100 μm) and a Ni foil, punched to φ11.28 mm, were placed in this order on the lower side of the sulfide solid electrolyte layer within the cell and pressed at 1 ton.
(5) The cell was constrained to a fixed size with a constraining pressure of 2 Nm (corresponding to approximately 30 MPa) to obtain a pressed cell A for evaluation.

3. Production of pressed cell B

Using the positive electrode mixture produced as described above, a φ11.28-mm pressed cell B was produced by the following procedure. The configuration of the produced pressed cell B is similar to the configuration of pressed cell A, and is as shown in FIG. 3.

(1) 120 mg of a sulfide solid electrolyte was placed into a cell and pressed at 1 ton. After holding for 1 min, the cell was pressed at 4 tons without releasing pressure and held for 1 min.
(2) A Li-10 wt% Mg alloy foil (thickness of 100 μm) and a Ni foil, punched to φ11.28 mm, were placed in this order on the lower side of the sulfide solid electrolyte layer within the cell, pressed at 1 ton, and held for 10 s.
(3) 15.3 mg of the positive electrode mixture was placed in a φ8-mm three-section press jig, pressed at 3 tons, and held for 1 min to obtain a positive electrode mixture pellet.
(4) The obtained positive electrode mixture pellet was extracted, and any burrs were removed.
(5) The positive electrode mixture pellet and an Al foil punched to φ11.28 mm were placed on the upper side of the sulfide solid electrolyte layer within the cell.
(6) The cell was constrained to a fixed size with a constraining pressure of 2 Nm (corresponding to approximately 30 MPa) to obtain a pressed cell B for evaluation.

4. Evaluation method

4.1 Electrochemical measurement

For the pressed cell A produced as described above, a constant-current charge/discharge test was carried out at 60°C with an upper limit cutoff potential for charging set to 3.1 V, a lower limit cutoff potential for discharging set to 1.5 V vs. $Li^+/Li$ (Comparative Example 1), 1.2 V vs. $Li^+/Li$ (Example 1), or 1.0 V vs. $Li^+/Li$ (Example 2), and 1 C = 5.84 mA/cm$^2$, using the following protocol.

(1) Conditioning (1.2 V discharge) and cycles 1 to 3: current density of 0.584 mA/cm$^2$, corresponding to 0.1 C
(2) Cycles 4 to 22: current density of 1.168 mA/cm$^2$, corresponding to 0.2 C
(3) Cycle 23: current density of 0.584 mA/cm$^2$, corresponding to 0.1 C
(4) Cycles 24 to 42: current density of 1.168 mA/cm$^2$, corresponding to 0.2 C
(5) Cycle 43: current density of 0.584 mA/cm$^2$, corresponding to 0.1 C
(6) Cycles 44 to 50: current density of 1.168 mA/cm$^2$, corresponding to 0.2 C

4.2 $^{31}$P solid-state NMR measurement

For the pressed cell B produced as described above, a constant-current discharge test was carried out at 60°C with a current density of 0.298 mA/cm$^2$, corresponding to 0.025 C (1 C = 11.93 mA/cm$^2$). The lower limit cutoff potential for discharging was set to 1.5 V vs. Li$^+$/Li (Comparative Example 1), 1.2 V vs. Li$^+$/Li (Example 1), or 1.0 V vs. Li$^+$/Li (Example 2), and after reaching the lower limit cutoff potential, the potential was maintained for 1 h. The positive electrode mixture pellet was then collected from the pressed cell B, and crushed and mixed in a mortar to obtain a positive electrode mixture powder. The obtained positive electrode mixture powder was subjected to $^{31}$P solid-state NMR measurement. The measurement conditions were as described in the embodiments of the present specification.

4.3 XAFS measurement

For the pressed cell B produced as described above, a constant-current discharge test was carried out at 60°C with a current density of 0.298 mA/cm$^2$, corresponding to 0.025 C (1 C = 11.93 mA/cm$^2$). The lower limit cutoff potential for discharging was set to 2.1 V vs. Li$^+$/Li (Comparative Example 3), 1.8 V vs. Li$^+$/Li (Comparative Example 2), 1.5 V vs. Li$^+$/Li (Comparative Example 1), 1.4 V vs. Li$^+$/Li (Example 3), 1.2 V vs. Li$^+$/Li (Example 1), or 1.0 V vs. Li$^+$/Li (Example 2), and after reaching the lower limit cutoff potential, the potential was maintained for 1 h. The positive electrode mixture pellet was then collected from the pressed cell B, and crushed and mixed in a mortar to obtain a positive electrode mixture powder. The obtained positive electrode mixture powder was subjected to XAFS measurement at sulfur K-edge (S K-edge) and XAFS measurement at phosphorus K-edge (P K-edge) under the following conditions. The positive electrode mixture pellet of the pressed cell B before discharging was also subjected to the same XAFS measurements (Reference Example 1).

Beam size: 1 mm (V) $\times$ 2 mm (H) at sample position
Analyzing crystal: InSb (111)
Measurement mode: total electron yield (TEY; analysis depth of several tens of nm) / partial fluorescence yield (PFY; analysis depth of several $\mu$m)
Remarks: vacuum chamber used

5. Evaluation results

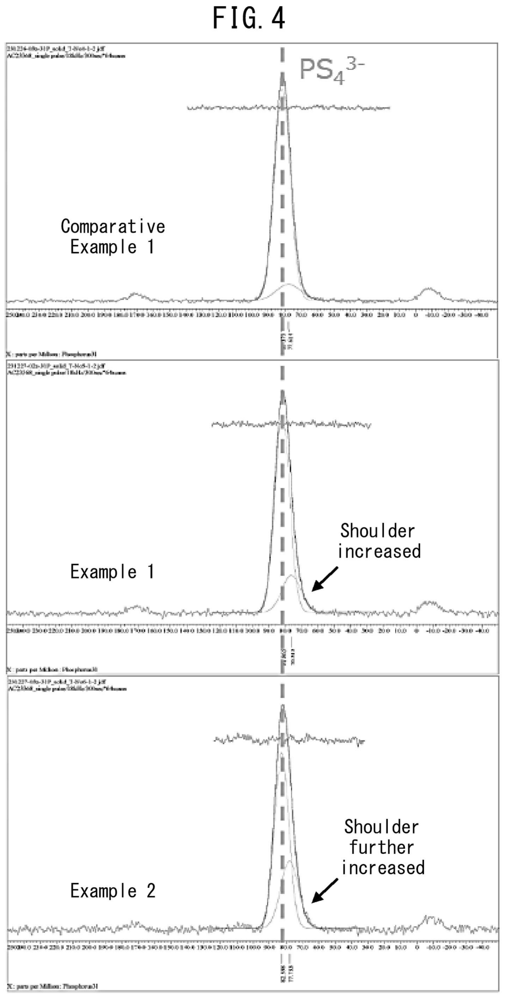

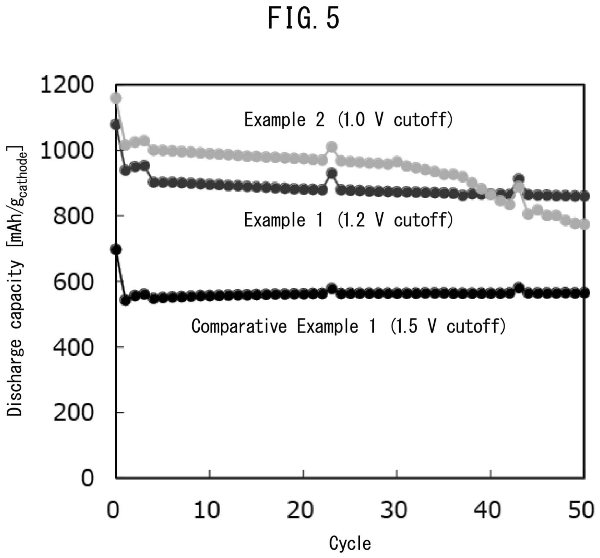

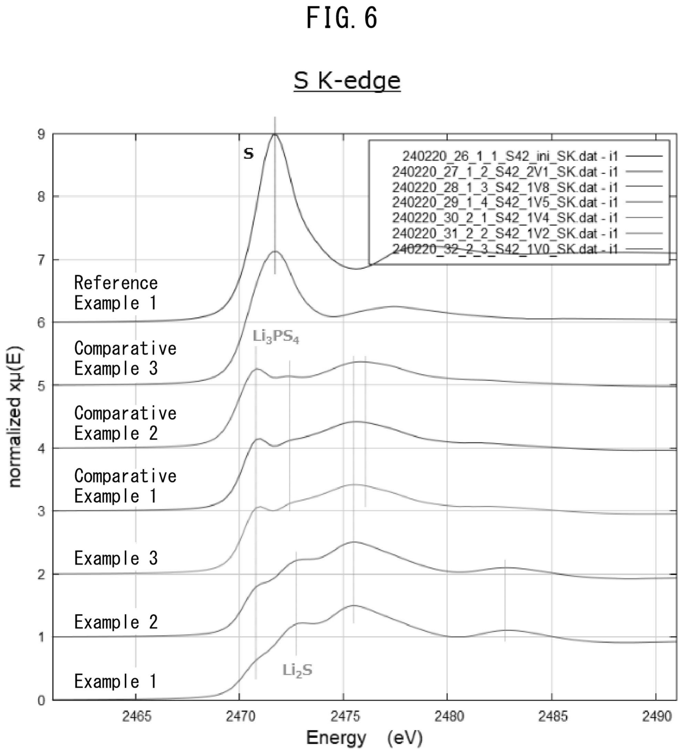

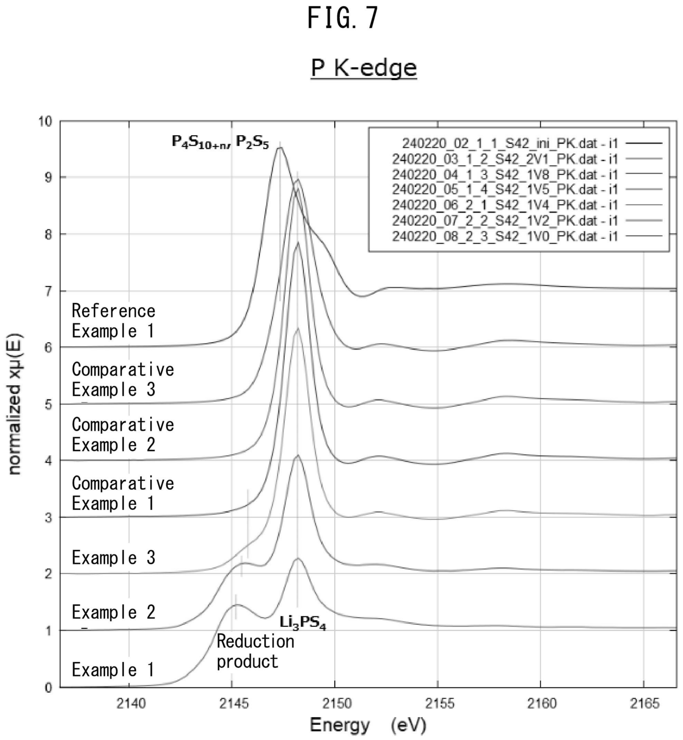

FIG. 4 shows $^{31}$P solid-state NMR spectra from the positive electrode mixture layers of Comparative Example 1 and Examples 1 and 2. Table 1 below shows integrated intensities determined from the $^{31}$P solid-state NMR spectra, "integrated intensity I1 of peak originating from PS$_4^{3-}$" and "integrated intensity I2 of peak originating from reduction product". FIG. 5 shows cycle characteristics of the pressed cells A of Comparative Example 1 and Examples 1 and 2. Table 1 below shows discharge capacity C0 at conditioning, discharge capacity C1 at the first charge/discharge cycle, and discharge capacity C50 at the 50$^{th}$ charge/discharge cycle for each pressed cell A. FIG. 6 shows XAFS measurement results at sulfur K-edge (S K-edge) of the positive electrode mixtures of Comparative Examples 1 to 3 and Examples 1 to 3, and FIG. 7 shows XAFS measurement results at phosphorus K-edge (P K-edge) thereof.

TABLE 1

| | Lower limit cutoff potential [V vs Li+/Li] | Integrated intensity I1 | Integrated intensity I2 | I1/I2 | C0 [mAh/g] | C1 [mAh/g] | C50 [mAh/g] |
|---|---|---|---|---|---|---|---|
| Comparative Example 1 | 1.5 | 89.5 | 10.5 | 8.52 | 697 | 543 | 566 |
| Example 1 | 1.2 | 80.8 | 19.2 | 4.21 | 1079 | 940 | 861 |
| Example 2 | 1.0 | 67.6 | 32.4 | 2.09 | 1159 | 1016 | 775 |

As shown in Table 1 and FIG. 4, it was found that as the cutoff potential decreased, the proportion of the peak (shoulder) located at a slightly lower chemical shift than the peak originating from $PS_4^{3-}$, which was presumed to be the peak originating from the reduction product of $PS_4^{3-}$, increased, and the integrated intensity ratio I1/I2 changed.

As shown in Table 1 and FIG. 5, it was found that when a battery comprising a positive electrode mixture layer comprising a sulfur-based active material and a P-containing sulfide was discharged, the more the cutoff potential decreased, the more the discharge capacities during initial conditioning and in the first cycle after conditioning increased (Examples 1 and 2).

As shown in FIGS. 6 and 7, it was found that when the cutoff potential was less than 1.5 V vs. $Li^+/Li$, a decrease in the peak originating from $Li_3PS_4$ generated at the early stage of discharging and increases in the peak originating from $Li_2S$ and the peak originating from the reduction product of $Li_3PS_4$ occurred simultaneously. Specifically, it is considered that a decrease in cutoff potential caused an increase in discharge capacity, including the reduction reaction of the electrochemically formed ion-conducting phase. More specifically, as shown in FIG. 7, it could be confirmed in the XAFS measurement results at phosphorus K-edge (P K-edge) that Examples 1 to 3 each had a peak having a peak top within the range of 2144 eV or more and 2147 eV or less. The peak was observed only when the cutoff potential was less than 1.5 V vs. $Li^+/Li$, and was considered to suggest the reduction of $PS_4^{3-}$.

Regarding discharge capacity in the 50$^{th}$ cycle after conditioning, Example 1 (1.2 V cutoff) surpassed Example 2 (1.0 V cutoff). The reason therefor was considered to be the progression of self-decomposition of the electrochemically formed ion-conduction phase at such a low potential.

From the foregoing, it can be said that a battery comprising a positive electrode mixture layer, an electrolyte layer, and a negative electrode and satisfying (I) and (II) below has excellent capacity and cycle characteristics.

(I) The positive electrode mixture layer comprises a sulfur-based active material and a P-containing sulfide.
(II) A $^{31}P$ solid-state NMR spectrum of the positive electrode mixture layer satisfies the relationship (1) below.

$$I1/I2 \leq 8.5 \ \ldots \ (1)$$

I1: integrated intensity of peak originating from $PS_4^{3-}$
I2: integrated intensity of peak originating from reduction product

In the above Examples, an aspect in which the positive electrode mixture layer comprises a sulfur-based active material, a P-containing sulfide, and carbon was exemplified. However, the components of the positive electrode mixture layer are not limited thereto. It is considered that as long as the positive electrode mixture layer comprises a sulfur-based active material and a P-containing compound and the relationship (1) above is satisfied, excellent cycle characteristics are ensured.

REFERENCE SIGNS LIST

100    battery
10    positive electrode
11    positive electrode mixture layer
12    positive electrode current collector
20    electrolyte layer
30    negative electrode
31    negative electrode active material layer
32    negative electrode current collector
200    control unit

**Claims**

1.    A battery, comprising a positive electrode mixture layer, an electrolyte layer, and a negative electrode, wherein

the positive electrode mixture layer comprises a sulfur-based active material and a P-containing sulfide, and
a $^{31}P$ solid-state NMR spectrum of the positive electrode mixture layer satisfies relationship (1) below:

$$I1/I2 \leq 8.5 \ (1)$$

I1: integrated intensity of peak originating from $PS_4^{3-}$
I2: integrated intensity of peak originating from reduction product.

2. The battery according to claim 1, wherein
the positive electrode mixture layer comprises carbon nanotube.

3. The battery according to claim 1 or 2, wherein
the electrolyte layer comprises a solid electrolyte.

4. The battery according to any one of claims 1 to 3, wherein
the negative electrode involves deposition of metallic lithium during charging, and involves dissolution of metallic lithium during discharging.

5. A battery system, comprising a battery and a control unit, wherein

the battery comprises a positive electrode mixture layer, an electrolyte layer, and a negative electrode, wherein the positive electrode mixture layer comprises a sulfur-based active material and a P-containing sulfide, and the control unit controls discharging of the battery so that cutoff potential of the positive electrode mixture layer of the battery is any potential between 1.0 V vs. Li$^+$/Li or more and less than 1.5 V vs. Li$^+$/Li.

# FIG. 1

100

# FIG. 2

# FIG. 3

Positive electrode

Electrolyte layer

Negative electrode

# FIG. 4

FIG. 5

# FIG. 6

## S K-edge

# FIG. 7

## P K-edge

Europäisches
Patentamt

European
Patent Office

Office européen
des brevets

## EUROPEAN SEARCH REPORT

**Application Number**

EP 26 15 3560

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/067695 A1 (ITO SEITARO [JP] ET AL) 28 February 2019 (2019-02-28)<br>* paragraphs [0010], [0032] *<br>* paragraph [0033] - paragraph [0036] *<br>* paragraph [0067] *<br>----- | 1-5 | INV.<br>H01M4/136<br>H01M4/58<br>H01M4/62<br>H01M10/052<br>H01M10/0562<br>H01M10/44 |
| A | US 2022/320580 A1 (NISHIMURA HIDEAKI [JP] ET AL) 6 October 2022 (2022-10-06)<br>* the whole document *<br>* paragraph [0054] - paragraph [0057] *<br>----- | 1-5 | |

**TECHNICAL FIELDS SEARCHED (IPC)**

H01M

The present search report has been drawn up for all claims

| Place of search | Date of completion of the search | Examiner |
|---|---|---|
| Munich | 12 June 2026 | Tylus, Urszula |

EPO FORM 1503 03.82 (P04C01)

## ANNEX TO THE EUROPEAN SEARCH REPORT
## ON EUROPEAN PATENT APPLICATION NO.

EP 26 15 3560

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2026

| Patent document cited in search report | Publication date | Patent family member(s) | | Publication date |
|---|---|---|---|---|
| US 2019067695 A1 | 28-02-2019 | NONE | | |
| US 2022320580 A1 | 06-10-2022 | CN | 115149096 A | 04-10-2022 |
| | | JP | 2022156238 A | 14-10-2022 |
| | | KR | 20220136147 A | 07-10-2022 |
| | | US | 2022320580 A1 | 06-10-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019212615 A, Kokai